# EUROPEAN PATENT APPLICATION

(11) **EP 3 370 201 A1**
(43) Date of publication of application: **05.09.2018**
(21) Application number: 16859889.4
(22) Date of filing: 27.10.2016
(51) Int. Cl.: G06Q 50/10, G06Q 30/06

(54) **DATA DISTRIBUTION MANAGEMENT SYSTEM**

(30) Priority: 28.10.2015 JP 2015212299
(71) Applicant: Omron Corporation, Kyoto-shi, Kyoto 600-8530 (JP)
(72) Inventor: ODA Toshihiko, Tokyo 108-0075 (JP)
(74) Representative: Horn Kleimann Waitzhofer Patentanwälte PartG mbB
(86) International application number: PCT/JP2016/081871
(87) International publication number: WO 2017/073660

(57) **Abstract**

A data distribution management system for mediating between a provider of data and a user of data includes a provider-side metadata acquisition means for acquiring, from a provider of data, provider-side metadata including data description information describing a specification of data to be provided and provision request information describing a desired condition on a provider side which is a condition to be satisfied in order for the provider of data to agree to provision, a user-side metadata acquisition means for acquiring, from a user of data, user-side metadata including data description information describing a specification of data that is desired to be used and use request information describing a desired condition on a user side which is a condition to be satisfied in order for the user of data to agree to use, a matching means for comparing the provider-side metadata with the user-side metadata and generating, in a case where the specifications of data and the desired conditions match, contract information pertaining to data provision from the provider to the user, and a data delivery means for transmitting data that is provided from the provider to a terminal of the user, in accordance with the contract information.

## Description

### TECHNICAL FIELD

The present invention relates to a technology for mediating between a provider of data and a user of data.

### RELATED ART

Currently, an IT environment called M2M Cloud is garnering attention. M2M (Machine to Machine) refers to a system in which machines of various application, size and performance exchange information over a network. By using this information, appropriate control of the respective machines and situation analysis of the real world become possible. As a result of factors such as improvement in wireless communication technologies that support M2M, miniaturization of machines and cost reductions, expectations for implementation are building.

The platform that realizes such M2M technologies in a cloud computing environment is called M2M Cloud. This provides basic functions required in M2M and services ranging from, for example, data collection and storage to processing and analysis as applications on a cloud, enabling use from anywhere. Collective management of data can enhance reliability and completeness. Also, for users, there is the advantage of being able to use as much collected data and as many computer resources as needed. Thus, it is possible to analyze big data and obtain added value without building a system individually, and application in a wide range of fields is expected.

Also, a technology called a sensor network is attracting attention. This technology enables collection, management and seamless use of sensing data, by installing sensor devices (hereinafter, also referred to simply as "sensors") having a sensing function and a communication function at various locations or industrial facilities, and networking these sensors.

Usually, sensors are installed in order to collect data that is required by the entity to which the sensors belong. Thus, it is often the case that the sensing data is not used (the sensors themselves are not operating or the sensing data is not used even when the sensors are operating) except when data is collected by the entity to which the sensors belong. Thus, the distributability of the sensing data is low, and no matter how significant the data is to a third party, analysis and use is limited to the entity to which the sensors belong. As a result, this leads to overlapping investment of facilities and network congestion due to communication with individually installed sensors.

Also, a technology called IoT (Internet of Things) is being investigated. Because this technology produces new value by combining information relating to many things that exist in the world over a network, seamless deployment of various services including condition monitoring of social infrastructure (e.g., networks of roads, bridges, buildings, gas pipes and water pipes) is expected. In order to produce value from IoT, the condition of the things that are connected to the network needs to be known, and sensing and communication become important element technologies.

In view of this, the applicant of the present invention, in order to realize a mechanism for appropriately distributing information resources (data with value), such as sensing data, data for 3D printers and knowledge information for robotic control in IoT, investigated a system that specifies sensors capable of acquiring sensing data that satisfies a request from an application, and controls the dataflow from the sensors to the application, by matching metadata produced in the provision of data in which information on the attributes of provided data and the provision conditions of the data are described with metadata in which information on the attributes of data desired by the application that uses the data and the use conditions of the data are described (see Patent Documents 1 and 2).

### RELATED ART DOCUMENTS

### PATENT DOCUMENTS

Patent Document 1: JP 5445722
Patent Document 2: JP 5590266

### SUMMARY OF THE INVENTION

### PROBLEMS TO BE SOLVED BY THE INVENTION

The present invention was made in view of the above situation, and an object thereof is to provide a technology for facilitating participation in a data distribution market, and promoting distribution and use of data.

### MEANS FOR SOLVING THE PROBLEMS

The invention recited in claim 1 is a data distribution management system for mediating between a provider of data and a user of data, including a provider-side metadata acquisition means for acquiring, from a provider of data, provider-side metadata including data description information describing a specification of data to be provided and provision request information describing a desired condition on a provider side which is a condition to be satisfied in order for the provider of data to agree to provision, a user-side metadata acquisition means for acquiring, from a user of data, user-side metadata including data description information describing a specification of data that is desired to be used and use request information describing a desired condition on a user side which is a condition to be satisfied in order for the user of data to agree to use, a matching means for comparing the provider-side metadata with the user-side metadata and generating, in a case where the specifications of data and the desired conditions match, contract information pertaining to data provision from the provider to the user, and a data delivery means for transmitting data that is provided from the provider to a terminal of the user, in accordance with the contract information.

According to the invention recited in claim 1, a contract pertaining to data provision is concluded between a data provider and a data user whose data specifications and desired conditions match, through matching of provider-side metadata with user-side metadata, and contract information that prescribes the contractual coverage is generated. Data delivery from the provider to the user is then performed, in accordance with the contract information. In this way, a series of processes related to data distribution including matching (pairing) of the provider and user of data, conclusion of a contract and data delivery is automatically performed by the data distribution management system, thus enabling participation in the data distribution market for both the provider and the user of data to be facilitated, and distribution and use of data to be promoted.

Contract information is desirably information that includes information certifying that a contract pertaining to data provision between a data provider and a data user has been concluded, information specifying the data provider and the data user who are the parties to the contract, information specifying the contractual coverage, and information indicating the date-time of contract conclusion. The information certifying that a contract has been concluded includes, in part, contract ID data that is issued for every contract conclusion, and the information specifying the parties to the contact, the information specifying the contractual coverage, the information indicating the date-time of contract conclusion and the like can also be encrypted with an encryption method (e.g., Minalpher) having a tamper detection function so as to prevent tampering. Unauthorized data use by forgery or tampering of contract information can thereby be prevented.

The invention recited in claim 2 is the data distribution management system recited in claim 1 characterized by further including a data collection means for collecting data automatically from the provider-side device in accordance with a data collection setting condition which is information defining a procedure for collecting data from a provider-side device of the provider via a network.

In systems that have being proposed heretofore, in order to participate in a data distribution market, the provider of data needed to prepare a function for transmitting (uploading) data to a system that mediates the users of data or the data. However, in order to develop a function for transmitting (uploading) data or introduce such a system, considerable costs are involved. This has been a large obstacle to participating to data distribution markets.

According to the invention recited in claim 2, a person who wishes to provide data (called a prospective provider) is able to easily provide data to a distribution market, by using the automatic data collection mechanism of the data collection means. Preparation required by the prospective provider amounts to setting (registering) data collection setting conditions in the system or setting the provider-side device in accordance with existing data collection setting conditions, and, unlike before, providers do not need to develop or introduce a system for transmitting (uploading) data themselves. Accordingly, participation in a data distribution market becomes comparatively easy, leading to expectations of an increase in participants in markets and an increase in the amount and type of data that is distributed in markets, and enabling distribution and use of data to be promoted.

The invention recited in claim 3 is the data distribution management system recited in claim 2 characterized by the provider-side metadata acquisition means acquiring the data acquisition setting condition from the provider as the provider-side metadata.

According to the invention recited in claim 3, prospective providers are able to freely configure (register) data acquisition setting conditions, thus also making it possible, for example, for prospective providers to directly release data that exists on a website, a blog, an SNS, an FTP site, a file server, a data uploader or the like that they are already operating to a data distribution market, thus improving convenience for prospective providers.

The invention recited in claim 4 is the data distribution management system recited in claim 2 or 3 characterized by the data collection setting condition including information on an API for use in data acquisition that is usable by the provider-side device with respect to another device.

According to the invention recited in claim 4, in the case where a prospective provider is already operating a website, a blog, an SNS, an FTP site, a file server, a data uploader or the like, it becomes possible to directly release data that exists on these servers to a data distribution market, by registering an API (procedure) for acquiring data from these servers as data collection setting conditions, thus improving convenience for the prospective provider.

The invention recited in claim 5 is the data distribution management system recited in any one of claims 2 to 4 characterized by the data collection setting condition including information relating to a period and/or a time for acquiring data.

According to the invention recited in claim 5, the data provider is able to designate the period and time for the data collection means to access the provider-side device. Use methods such as configuring settings so that data collection is performed in a time slot when the load of the provider-side device is low or releasing data for a limited period thereby become possible.

The invention recited in claim 6 is the data distribution management system recited in claim 5 characterized by further comprising a task generation means for generating a collection task prescribing a date-time for executing data collection from the provider-side device, based on the data collection setting condition, and the data collection means executing the collection task when the execution date-time arrives.

According to the invention recited in claim 6, it becomes possible to perform data collection efficiently as a result of task management, without concentrating the load on the provider-side device or the data distribution management system.

The invention recited in claim 7 is the data distribution management system recited in any one of claims 1 to 6 characterized by further comprising a data format specification information registration means for acquiring, from a provider of data, data format specification information which is information relating to a specification of a data format uniquely created by the provider, and registering the data format specification information in a data format specification information database, and the data description information being configured to describe a format ID specifying the data format specification information registered in the data format specification information database.

According to the invention recited in claim 7, the provider of data is able to uniquely design and register the data format, thus enabling the degree of freedom of data formats that can be handled by the system to be enhanced, and the diversity of data formats to be flexibly supported.

The invention recited in claim 8 is the data distribution management system recited in claim 7 characterized by the data format specification information including at least one of description of the specification of the data format, information on a file describing the specification of the data format, and a URI of a resource describing the specification of the data format.

According to the invention recited in claim 8, the setting method of the specification of the data format can be selected from three methods, thus enabling convenience for the data provider to be improved.

The invention recited in claim 9 is the data distribution management system recited in claim 7 or 8 characterized by the data format specification information being configured to describe a compatible format ID which is the format ID of a data format that is compatible with the uniquely created data format.

According to the invention recited in claim 9, a compatible data format can be grasped by referring to the data format specification information, thus enabling convenience for the data user to be improved.

The invention recited in claim 10 is a data distribution management system recited in any one of claims 7 to 9 characterized by the matching means acquiring, from the data format specification information database, a compatible format ID relating to the format ID on the provider side described in the data description information included in the provider-side metadata, and judging that the data formats match, in a case where the format ID on the user side described in the data description information included in the user-side metadata coincides with one of the format ID on the provider side and the compatible format ID relating thereto.

According to the invention recited in claim 10, matching is also successful in the case where the data format is compatible, thus enabling the success rate of matching of user-side metadata and provider-side metadata to be enhanced.

The invention recited in claim 11 is the data distribution management system recited in any one of claims 1 to 10 characterized by further comprising a data reader database for storing a data reader which is a program for using data in a data format uniquely created by the provider, and the data reader database being configured to provide a data reader for using the data in the data format uniquely created by the provider to the terminal of a user that uses the data.

According to the invention recited in claim 11, the provider of data is able to uniquely design the data format, thus enabling the degree of freedom of data formats that can be handled by the system to be enhanced, and the diversity of data formats to be flexibly supported. In addition, according to this method, since the data provider is able to not release (hide) the specific specification of the data format, the uniqueness of the data to be provided is enhanced, and there is also the advantage of being able to achieve differentiation from other providers. Also, there is the advantage of the data user being able to use various unique data formats (without changing the user-side application), by appropriately changing the data reader that is used.

The invention recited in claim 12 is the data distribution management system recited in claim 11 characterized by the data reader being a program having a function of converting the data in the data format uniquely created by the provider into data conforming to a generic data format, and the data description information being configured to describe information for specifying the generic data format.

According to the invention recited in claim 12, matching between a data provider and a data user can be performed, using information for specifying generic data formats. Accordingly, as a result of data users simply specifying a generic data format as the specification of data that they want to use, not only data conforming to the generic data format but also data of unique data formats that can be handled just like data based on the generic data format by using a data reader is chosen as data that meets the conditions. Therefore, for data users, there is the advantage of not needing to be aware of unique data formats or the necessity for a data reader, and, for data providers, there is the advantage of being able to increase the use opportunities of data.

Note that the present invention can be regarded as a data distribution management system that has at least part of the above configurations or functions. The present invention can also be regarded as a device network system or a sensor network system that has the data distribution management system. The present invention can also be regarded as a data distribution management method that includes at least part of the above processing, as a program for causing a computer to execute this method, or as a computer-readable recording medium on which such a program is recorded in a non-transitory manner. The present invention can be configured by combining the various configurations and various processing that are described above, as long as there are no mutual inconsistencies.

### EFFECTS OF THE INVENTION

According to the present invention, participation in a data distribution market can be facilitated, and distribution and use of data can be promoted.

### BRIEF DESCRIPTION OF THE DRAWINGS

Fig. 1 is a diagram showing the overall configuration of a data distribution management system of a first embodiment.
Fig. 2 is a diagram showing the physical configuration and the program configuration of a data distribution information server.
Fig. 3 is a diagram showing the physical configuration and the program configuration of the data distribution information server.
Fig. 4 is a diagram showing an example of the data structure of contract information.
Fig. 5 is a diagram showing the flow of processing performed by the data distribution management system.
Fig. 6 is a diagram showing an example of a registration screen of data collection setting conditions.
Fig. 7 is a diagram showing an example of a data collection setting conditions table.
Fig. 8 is a diagram showing an example of collection tasks that are registered in a collection task table.
Fig. 9 is a diagram showing the processing flow of a data collection program.
Fig. 10 is a diagram showing an example of the collection tasks that are registered in a collection task table.
Fig. 11 is a diagram showing the physical configuration and the program configuration of a data distribution information server of a second embodiment.
Fig. 12 is a diagram showing the flow of processing performed by a data distribution management system of the second embodiment.
Fig. 13 is a diagram showing an example of the registration screen of data format specification information.
Fig. 14 is a diagram showing an example of the data format specification information table.
Figs. 15A and 15B are flowcharts of matching processing.
Fig. 16 is a diagram showing an example of a provision request table and a provision data description table.
Fig. 17 is a diagram showing an example of a use request table and a use data description table.
Fig. 18 is a diagram illustrating a data reader class and a data reader of a third embodiment.
Fig. 19 is a diagram showing the physical configuration and the program configuration of a data distribution information server of the third embodiment.
Fig. 20 is a diagram showing the flow of processing performed by the data distribution management system of the third embodiment.

### EMBODIMENTS OF THE INVENTION

Hereinafter, preferred embodiments of the present invention will be described in detail with reference to the drawings. Note that although the following embodiments describe examples in which the present invention is applied to an infrastructure forming a distribution market for sensing data, the applicable scope of the present invention is not restricted to the distribution of sensing data, and the present invention can also be applied to the distribution of any type of digital data as long as there exist a prospective provider and a prospective user.

### First Embodiment

### Overall Configuration of System

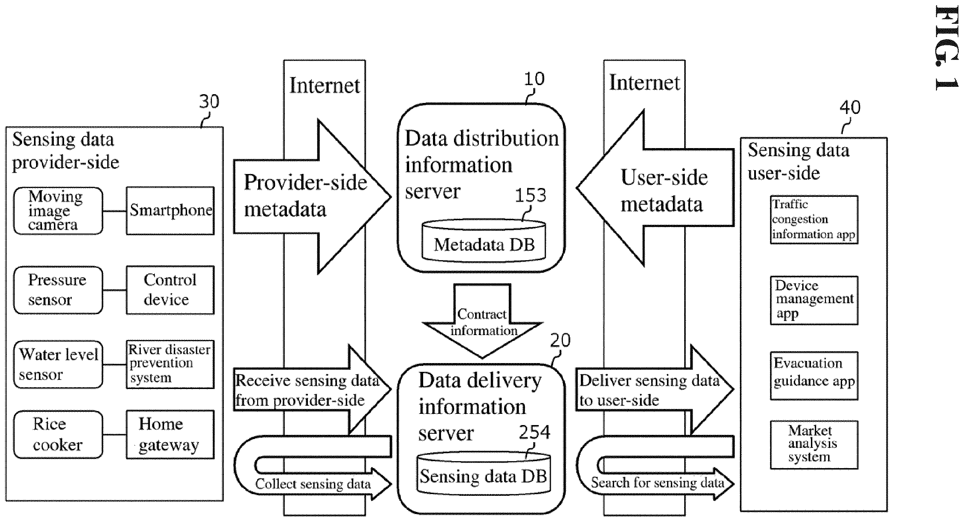

Fig. 1 shows the overall configuration of a data distribution management system according to the first embodiment of the present invention. The data distribution management system is constituted, broadly, by a data distribution information server 10 and a data delivery information server 20.

The data distribution information server 10 is a server that, in order to distribute sensing data openly on the Internet, provides a function of storing metadata respectively accepted from parties (providers) that want to provide sensing data for a charge or free of charge and parties (users) that want to use sensing data in a metadata DB 153, matching the metadata of the both parties, and concluding a contract for data trading between a provider and a user whose conditions match.

Also, the data delivery information server 20 is a server that mainly provides the following four functions to a provider and a user that have been matched and have concluded a contract.

### (1) Data Reception Function

A data reception function is a function of receiving, via the Internet, sensing data transmitted from a provider-side device 30 of a provider. The data delivery information server 20, if required, registers and stores the received data in a sensing data DB 254.

### (2) Data Collection Function

A data collection function is a function of acquiring (collecting) data from the provider-side device 30 of a provider. The data reception function of (1) is passive (negative) data acquisition, whereas the data collection function of (2) is active (positive) data acquisition. The data collection function collects data automatically from the provider-side device 30, in accordance with data collection setting conditions defining the procedure for accessing the provider-side device 30 and collecting data, and, if required, registers and stores the collected data in the sensing data DB 254.

### (3) Data Delivery Function

A data delivery function is a function of transmitting sensing data acquired by the data reception function or the data collection function to a terminal 40 of a user. For example, in the case where there exist a plurality of users Q1, Q2 and Q3 that have concluded a contract with a certain provider P, the data delivery function delivers sensing data received or collected from the provider-side device 30 or sensing data stored in the sensing data DB 254 to the respective terminals 40 of the users Q1, Q2 and Q3 at a required timing.

### (4) Data Search Function

A data search function is a function of searching data stored in the sensing data DB 254 on accepting a search request for sensing data from a terminal 40 of a user, and returning a search result to the terminal 40. For example, when a terminal 40 of a user requests sensing data acquired at a desired date-time, the data search function checks whether data of that date-time is stored in the sensing data DB 254 and, if such data exists, delivers that sensing data to the terminal 40, and, if this is not the case, sends a reply to the terminal 40 indicating that such data does not exist.

Sensing data is data that is obtained by detecting (acquiring) the state of an object that is under observation with a sensor device (may include secondary data obtained by processing or modifying observed primary data or accompanying data such as the observation date-time of data). The sensor device may be, for example, an image sensor (camera), a temperature sensor, a moisture sensor, an illumination sensor, a force sensor, a sound sensor, a RFID sensor, an infrared sensor, an attitude sensor, a rainfall sensor, a radioactivity sensor, a gas sensor, a water level sensor, or a traffic volume sensor. Also, a household electrical appliance such as a rice cooker, a biosensor, an activity meter, a wearable terminal or the like can be regarded as a sensor. The sensing data that is acquired by these sensors is provided over the Internet via the provider-side device 30. The provider-side device 30 is device that is provided with a data input-output interface with the sensor and a communication interface with the Internet, and various forms are envisaged according to the type and specification of the sensor. In Fig. 1, a smartphone, a sensor control apparatus, a river disaster prevention system (Web server), and a home gateway (network device) are shown as examples of provider-side devices 30. Alternatively, devices such as a probe vehicle or a drone are conceivable. Note that in the case of a sensor that incorporates a communication function, it is also possible for the sensor itself to serve the function of the provider-side device 30. Sensing data that is obtained from various sensors can be used by various applications. In Fig. 1, a traffic congestion information app, a device management app, an evacuation guidance app and a market analysis system are shown as examples of use applications.

### Configuration of Servers

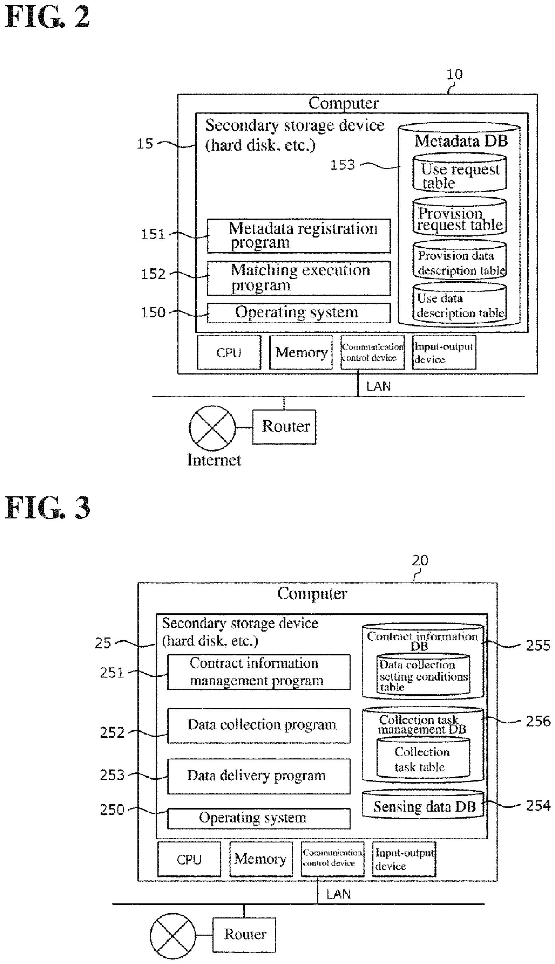

An example of the configurations of the data distribution information server 10 and the data delivery information server 20 will be described, with reference to Figs. 2 and 3. Fig. 2 shows a physical configuration and a program configuration of the data distribution information server 10, and Fig. 3 shows a physical configuration and a program configuration of the data delivery information server 20.

The data distribution information server 10 is constituted by a computer system that has a central processing unit (CPU), a volatile memory, a LAN communication control device, an input-output device, and a secondary storage device 15 such as a hard disk. A metadata registration program 151 and a matching execution program 152 are stored in the secondary storage device 15 in addition to an operating system 150. Also, the metadata DB 153 storing the metadata of both providers and users and a user information DB (not shown) storing personal information (ID, name, e-mail address, etc.) of respective providers and users have been constructed in the secondary storage device 15.

The data delivery information server 20 is constituted by a computer system that has a central processing unit (CPU), a volatile memory, a LAN communication control device, an input-output device, and a secondary storage device 25 such as a hard disk. A contract information management program 251, a data collection program 252, and a data delivery program 253 are stored in the secondary storage device 25, in addition to an operating system 250. Also, a sensing data DB 254 that stores sensing data acquired from providers, a contract information DB 255 that stores contract information between providers and users, and a collection task management DB 256 that manages collection tasks to be executed by the data collection function have been constructed in the secondary storage device 25.

Note that the configurations shown in Figs. 2 and 3 are examples, and the server configurations are not limited thereto. For example, the data distribution information server 10 and the data delivery information server 20 may be implemented in the same computer system. Alternatively, distributed processing by a plurality of computer systems is also preferably performed.

### Function of Servers

Next, functions that are provided by the programs of the data distribution information server 10 and the data delivery information server 20 will be described. Note that it is possible for the metadata registration program 151, the matching execution program 152, the contract information management program 251, the data collection program 252 and the data delivery program 253 that operate in these servers to operate in parallel.

The metadata registration program 151 provides a function (provider-side metadata acquisition means) of acquiring provider-side metadata from providers of data, and a function (user-side metadata acquisition means) of acquiring user-side metadata from users of data. The metadata registration program 151 provides a user interface (Web page) for registering metadata and an API (Application Programming Interface) for use in metadata registration, and providers and users of data are able to register metadata by either of methods involving manually inputting metadata using the user interface or transmitting metadata to the API. Registered metadata is stored in a table within the metadata DB 153.

In the present embodiment, the provider-side metadata is constituted by two types of metadata consisting of (1) a provision request and (2) a provision data description, and the user-side metadata is constituted by two types of metadata consisting of (3) a use request and (4) a use data description. The information that is described by the respective metadata is as follows.

### (1) Provision Application

The provision request is information describing desired conditions on the provider side, which are the conditions to be satisfied in order for the provider to agree to provision of data. Information such as an ID for specifying the provider, a selling price (may be free of charge) of the data, a provision data description ID and a provision period is included in the provision request. Furthermore, information such as the address (IP address, etc.) of a sensor or a provider-side device 30, the use range of data (whether commercial use is possible or whether use is limited to individual use or academic use, etc.), and information indicating whether redistribution of data is permitted may also be included.

In the case of using the abovementioned data collection function, the data collection setting conditions are described in the provision request. A data collection setting condition is information defining the procedure for collecting data from the provider-side device 30, and includes at least information on APIs (Application Programming Interfaces) for use in data acquisition that are supported by the provider-side device 30 with respect to other devices and information relating to the period and/or time for acquiring data.

As APIs for use in data acquisition, "URL" (Uniform Resource Locator), "Method", "Parameter", "Access Key" and "SSL Certificate", for example, are set. URL is address information of a Web server or an FTP server that operates on the provider-side device 30. Method is a function for acquiring data from the provider-side device 30, and, for example, a GET function is used in the HTTP protocol or the ftp protocol. Parameter is a parameter that is designated when acquiring data from the provider-side device 30. Access Key is, for example, an access key for Basic authentication set in the provider-side device 30, and SSL Certificate is a certificate of the provider-side device 30 that is required in SSL encrypted communication.

Also, as information relating to the period and/or time for acquiring data, "Collection Interval", "Collection Period", "Collection Start Day", "Collection End Day" and "Collection Time", for example, are set. Collection Interval is the time interval for collecting data from the provider-side device 30, and settings such as 1 hour intervals, 1 day interval and 1 week interval, for example, are possible. Collection Period is the period for collecting data, and settings such as 10 days, 5 months and 1 year, for example, are possible. Collection Start Day is the date for starting collection of data, and Collection End Day is the year, month and day for ending collection of data. Only one of Collection Period and Collection End Day need be set. Collection Time is the time (hours, minutes, seconds) for executing collection during one day. For example, in the case where Collection Interval is set to "1 day intervals" and Collection Time is set to "15 hr, 00 min, 00 sec", data collection will be executed at exactly 15:00 every day, and in the case where Collection Interval is set to "1 hour intervals" and Collection Time is set to "15 min, 0 sec", data collection will be executed for 15 minutes every hour.

### (2) Provision Data Description

The provision data description is information describing the specification of data that is provided by a provider. The type of data, the observation target, an observation indicator and the like are described in the provision data description. Types of data are image, moving image, audio, text and time series data, for example. A configuration may be adopted in which detailed information such as resolution, monochrome/color, frame rate, sampling rate, data format and the like can be set. An observation target is an object or a place that is to be observed by a sensor, and an observation indicator is the contents or physical quantity indicated by data. For example, in the case of sensing data indicating the water level of X river, the observation target is set to "X river" and the observation indicator is set to "water level", and in the case of sensing data indicating the volume of traffic at Y intersection, the observation target is set to "Y intersection" and the observation indicator is set to "number of passing cars per unit time".

### (3) Use Request

The use request is information describing desired conditions on the user side, which are conditions to be satisfied in order for the user to agree to use of data. Information such as an ID for specifying the user, a purchase price of the data, a use data description ID, a use period and a data destination address (IP address, e-mail address, etc.) is included in the use application. Furthermore, information such as the use range of data (whether commercial use is possible or whether use is limited to individual use or academic use, etc.), information indicating whether redistribution of data is desired, and the type of use application may also be included.

### (4) Use Data Description

The use data description is information describing the specification of data that the user wants to use. The configuration of the use data description may be the same as the provision data description.

The matching execution program 152 provides a function (matching means) of matching providers and users, and, in the case where is a matching combination is found (in the case where matching is successful), generating contract information relating to data provision from the provider to the user. Specifically, the matching execution program 152 extracts one record each of a provision request and a use request from the table within the metadata DB 153, and compares every item of the desired conditions described in the provision request and the desired conditions described in the use request. When all of the items match, the matching execution program 152 reads out the corresponding provision data description and use data description from the metadata DB 153 on the basis of the provision data description ID that is included in the provision request and the use data description ID that is included in the use request. The matching execution program 152 then compares every item of the data specification described in the provision data description and the data specification described in the use data description, and, when all of the items match, determines that matching between this provider and this user is successful, and generates contract information.

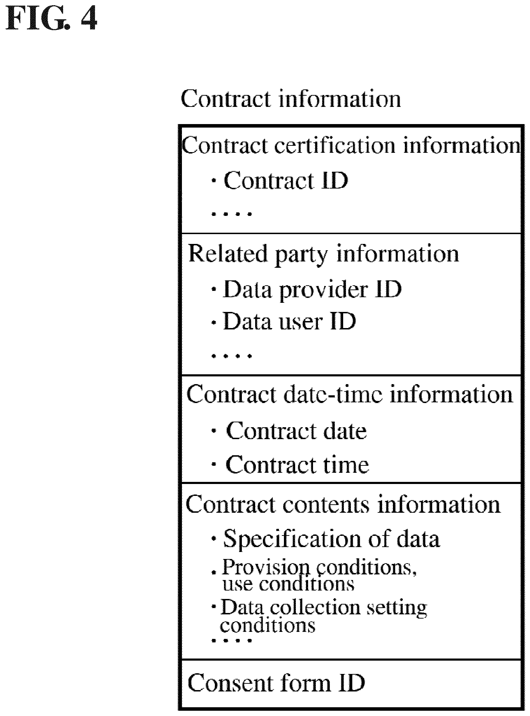

Contract information is information describing the contents of the contract pertaining to data provision between a data provider and a data user. A specific example of the data structure of contract information is shown in Fig. 4. In this example, contract information includes information (contract certification information) certifying that the contract has been concluded, information (related party information) specifying the data provider and the data user who are the parties to the contact, information (contractual coverage information) specifying the contractual coverage, and information (contract date-time information) indicating the date-time of contract conclusion. Contract certification information is a type of digital certificate, includes, in part, contract ID data that is issued for every contract conclusion, and is encrypted with an encryption method having a tamper detection function (e.g., Minalpher) that is able to prevent related party information, contractual coverage information, contract date-time information and the like from being tampered with. Whether or not the data of contract information such as contract certification information, contract ID, related party information, contractual coverage information and contract date-time information is legitimate can thereby be easily examined. Accordingly, the use of unauthorized data obtained by forgery or tampering of contract information can be prevented. Related party information is the respective IDs of the provider and the user of data, for example. Contractual coverage information includes the specification of data to be provided, provision conditions and use conditions, and (in the case of using the data collection function) data collection setting conditions and the like, for example. Note that instead of describing the above information in the contract information, an ID of the provision request, an ID of the use request, an ID of the provision data description, an ID of the use data description and the like may be described, or links to such information may be described. Incidentally, in operating a mechanism such as the present system, it is preferable that, with regard to automatically concluding a contract with the matching of metadata, consent is received in advance from the both the data provider and the data user and a consent form is kept on the system side. In such cases, it is also preferable that IDs of the consent form of the contracting parties or links to the consent form are described in the contract information.

The execution timing of matching processing is arbitrary. For example, when there is a new registration or a change of a provision request, collation with all of the use requests registered in the database may be immediately executed. Also, in a similar manner, when there is a new registration or a change of a use request, collation with all of the provision requests registered in the database may be immediately executed. Alternatively, matching processing may be executed at a predetermined time interval.

The contract information management program 251 provides a function of receiving the contract information generated by the data distribution information server 10, and registering in the table of the contract information DB 255. In the case where the information relating to the data collection setting conditions is included in the contract information, this information is registered in a data collection setting conditions table. Also, the contract information management program 251 provides a function (task generation means) of generating tasks (collection tasks) that prescribe a date-time for executing data collection from the provider-side device 30, based on the data collection setting conditions, and registering these tasks in a collection task table of the collection task management DB 256.

The data collection program 252 is a program that provides the aforementioned data collection function (data collection means). Specifically, the data collection program 252 refers to the collection task table of the collection task management DB 256, and if there is a collection task whose execution date-time has arrived, executes the task and collects the data from the provider-side device 30.

The data delivery program 253 is a program that provides the aforementioned data delivery function (data delivery means). The destination address of data and the transmission timing are referred to from the contract information.

### Operation of System

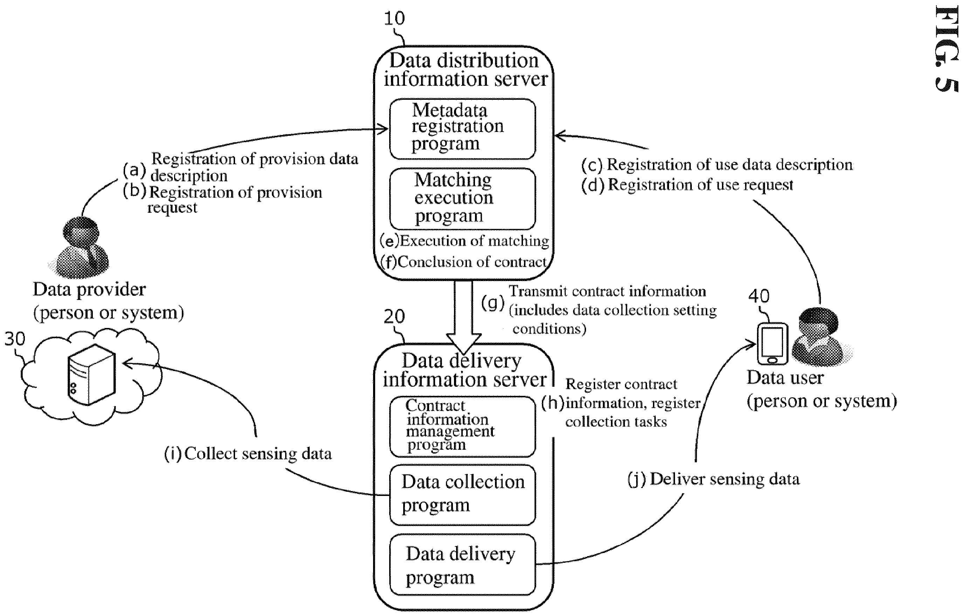

Fig. 5 shows the flow of a series of the processing that is performed in the data distribution management system. (a) to (j) below are descriptions of the processing of corresponding signs within Fig. 5.

(a) Data providers register provision data descriptions in the data distribution information server 10.
(b) The data providers register provision requests in the data distribution information server 10. At this time, the IDs of the registered provision data descriptions are described in the provision requests. The data providers, in the case of wanting to use of the data collection function, also register data collection setting conditions.
(c) Data users register use data descriptions in the data distribution information server 10.
(d) The data users register use requests in the data distribution information server 10.
(e) The data distribution information server 10 compares the registered provider-side metadata and user-side metadata, and searches for combinations of providers and users whose conditions are compatible.
(f) When a combination whose conditions are compatible is found, the data distribution information server 10 generates contract information relating to data provision.
(g) The data distribution information server 10 transmits the contract information generated in (f) to the data delivery information server 20. In the case where the data provider wants to use the data collection function, information on the data collection setting conditions is also included in the contract information.
(h) The data delivery information server 20 registers the contract information in a database, and generates required collection tasks on the basis of the data collection setting conditions and registers the collection tasks in a collection task table.
(i) The data delivery information server 20, by executing the collection tasks, accesses the data provider-side device 30 of the provider and acquires sensing data. The acquired data is registered in the sensing data DB.
(j) The data delivery information server 20 transmits required data to the user-side terminal 40 of the data user, based on the contract information.

As described above, a series of processing consisting of matching of a provider and a user, conclusion of a contract, collection of data and delivery of data is entirely executed automatically, by providers and users simply registering metadata describing their respective conditions.

### Working Example

Next, a specific working example of the data distribution management system will be described.

For example, assume that a certain operator is running a website that releases hourly water levels of a river, and is considering selling the information (water level data) on this website in a data distribution market. However, the operator, to save costs, wants to avoid developing a mechanism in which water level data is registered in a system every hour, and to directly utilize the data on the current website.

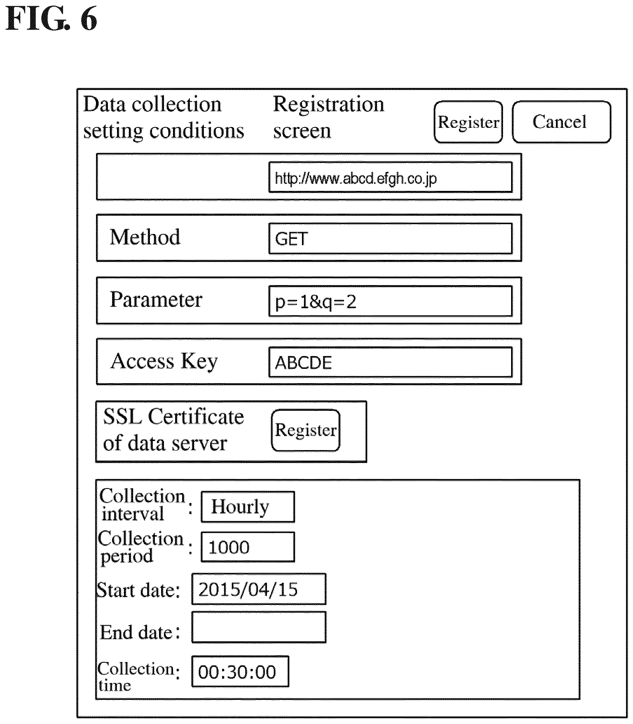

The operator, using a terminal such as a personal computer or a smartphone, accesses the website of the data distribution information server 10, and completes member registration. Next, an operator registers a provision data description and a provision request, using a metadata registration screen. Data collection setting conditions are also registered when registering the provision request. Fig. 6 shows an example of a registration screen for the data collection setting conditions that is provided by the metadata registration program 151. On this registration screen, it is possible to set the URL of the website on which the operator releases water level data, the method for acquiring water level data, parameters, the access key, the SSL certificate for accessing the website, the collection interval, the collection period, the start date, the end date, and the collection time. In the exemplary settings of Fig. 6, the following conditions are set in a server that is designated by the URL "http://www.abcd.efgh.co.jp": perform data collection at 30 min 00 sec at 1 hour intervals from 0:00 on April 15, 2015, and end the processing when data collection has been performed 1000 times (1000 hours).

When the provider-side metadata of the operator is registered in the data distribution information server 10, the matching execution program 152 starts up and matching processing of registered user-side metadata is performed. In the case where a user who matches the requirements of the operator is found, contract information is generated and sent to the data delivery information server 20.

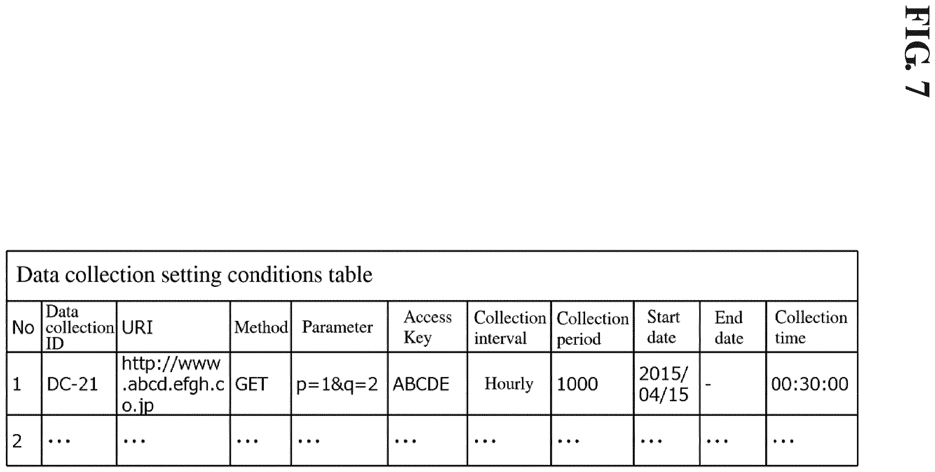

In the data delivery information server 20, the contract information management program 251 receives the contract information, and registers the received information in the contract information DB 255. Information relating to the data collection setting conditions that is included in the contract information is registered in the data collection setting conditions table. Fig. 7 shows an example of the data collection setting conditions table.

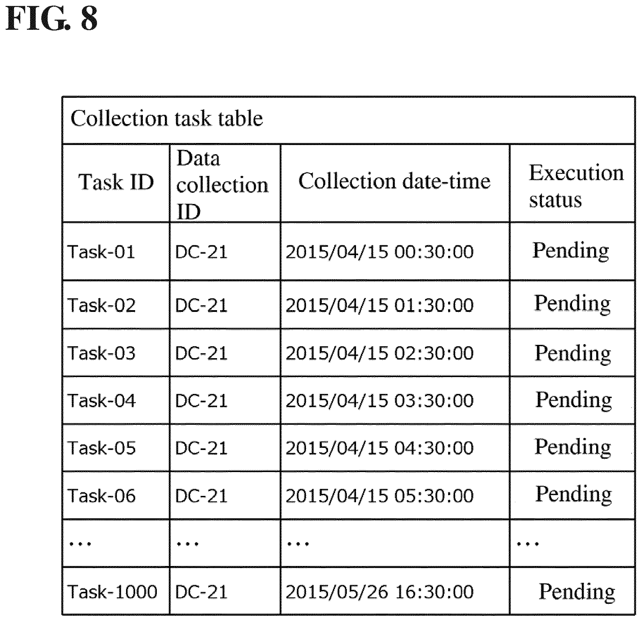

Furthermore, the contract information management program 251 calculates all of the date-times for when data collection is to be executed, from information on the collection interval, the collection period, the start date, the end date, and the collection time within the data collection setting conditions, and registers collection tasks in the collection task table. Fig. 8 shows an example of collection tasks that are registered in the collection task table. In this example, 1000 collection tasks consisting of Task-01, Task-02, ..., Task-1000 are registered for a data collection ID "DC-21", such that data collection is executed 1000 times at 1 hour intervals from 00:30:00 on April 15, 2015. In an initial state, the execution status is set to "pending".

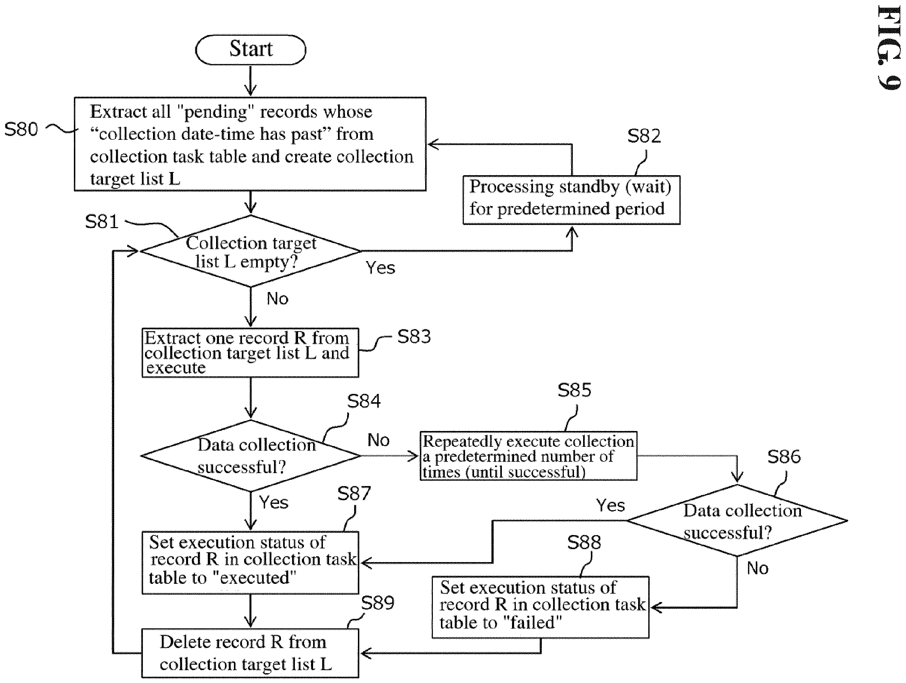

The data collection program 252 refers to the collection task table at intervals of 1 minute, and executes collection tasks whose date-time to be executed has arrived. The processing flow of the data collection program 252 is shown in Fig. 9.

In step S80, the data collection program 252 extracts, from the collection task table, all records that satisfy the conditions that the execution status is "pending" and the collection date-time is in the past relative to the current time, and generates a collection target list. If the collection target list is empty (YES in step S81), the data collection program 252 waits for a predetermined time (e.g., 1 minute), and executes step S80 again.

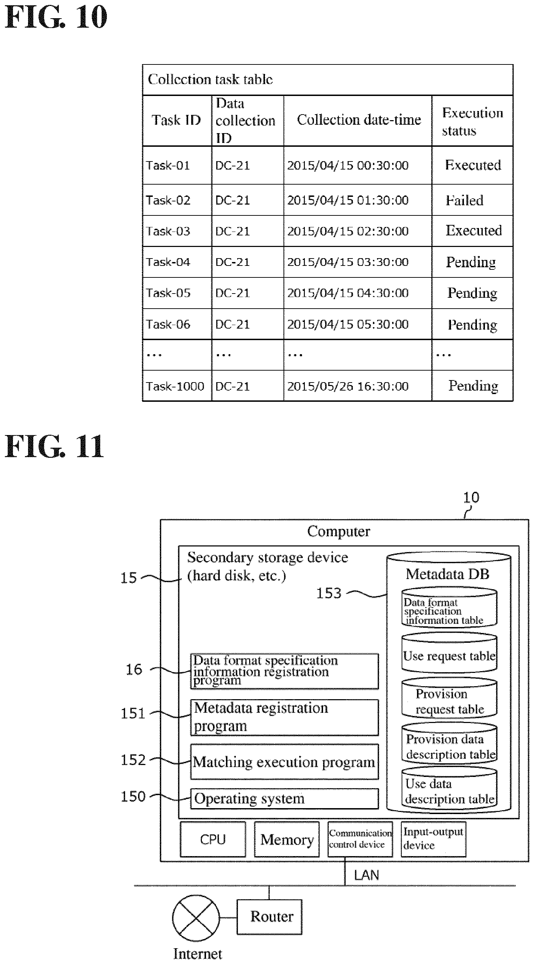

If records are included in the collection target list (NO in step S81), the data collection program 252 extracts one record from the collection target list, and executes the task (step S83). For example, when the current time is 4:31 on April 15, 2015, the one record having the task ID "Task-05" is extracted upon referring to a collection task table such as shown in Fig. 10. The data collection program 252, in order to execute the data collection of Task-05, acquires the record whose data collection ID is DC-21 from the data collection setting conditions table (Fig. 7), accesses the Web server of the operator using an HTTP GET request, based on the information that is set in the acquired record, and acquires the water level data of the river that is included in the message body of the response. The acquired data is registered in the sensing data DB if required. If data collection fails (No in step S84), the data collection program 252 repeatedly executes collection a predetermined number of times (until data collection is successful) (step S85).

If data collection is successful (Yes in step S84 or Yes in step S86), the data collection program 252 sets the execution status in the collection task table to "executed" (step S87). If data collection fails (No in step S86), the data collection program 252 sets the execution status in the collection task table to "failed" (step S88). Thereafter, the data collection program 252 deletes this record from the collection target list (step S89). The processing of steps S81 to S89 is repeatedly executed until there are no more records in the collection target list.

As described above, the water level data of the river automatically collected by the data collection program 252 is transmitted to a user in accordance with the contract information.

### Advantage of Present Embodiment

According to the configuration of the present embodiment, a data provider is able to easily provide data to a distribution market, by using the mechanism of the automatic data collection performed by the data delivery information server 20. Preparation required by the data provider amounts to setting (registering) data collection setting conditions in the system or setting the provider-side device 30 in accordance with existing data collection setting conditions, and, unlike before, providers do not need to develop or introduce a system for transmitting (uploading) data themselves. Accordingly, participation in a data distribution market becomes comparatively easy, leading to expectations of an increase in participants in the market and an increase in the amount and type of data that is distributed in the market, and enabling distribution and use of data to be promoted.

Also, in the case where a data provider is already running a website, a blog, an SNS, an FTP site, a file server, a data uploader or the like, it becomes possible, by registering an API (procedure) for acquiring data from these servers as data collection setting conditions, to directly release data that exists on these servers to a data distribution market, thus improving convenience for the data provider.

Also, data providers are themselves able to designate the period or time for the data delivery information server 20 to access the provider-side device 30. Use methods such as configuring data collection to be performed during a time slot in which the load of the provider-side device 30 is low or releasing data for a limited period thereby become possible.

Also, there is also the advantage of being able to perform data collection efficiently as a result of task management, without concentrating the load on the provider-side device 30 or the data distribution management system.

### Second Embodiment

In a data distribution market such as described above, it is assumed that data in various forms (formats) will be traded. Therefore, trading of data needs to take place after both the data provider and the data sender have reached a common recognition and understanding regarding the data format. For example, assuming that the data provider provides image data acquired with an image sensor, there are times when information such as the shooting date, the shooter, the shooting conditions and remarks are attached and transmitted, after having designated MPEG, JPEG, H.26X or the like as the format standard of an image. In such cases, the user side will need to create or designate an application that will use the received data, after having beforehand comprehended the format specification such as what information is attached to the image and how that information is ordered. Also, it is envisaged, for example, that the provider side will also demand being able to freely design the format of data that is to be provided, such as wanting to provide composite data sets that compile the data of a plurality of sensors, wanting to use data formats such as XML, CSV and JSON, wanting to designate coding such as EUC and SJIS, wanting to designate arbitrary compression schemes, and wanting to provide data in uniquely defined formats. Accordingly, in order to also make participation in a data distribution market easier and to promote distribution and use of data, it is desirable to enhance the degree of freedom of formats that can be handled by the system, and to make it possible to flexibly support the diversity of formats.

The second embodiment of the present invention that is discussed below employs a mechanism that enables a data provider to arbitrarily create and register format specifications, in view of situations such as the above. Note that, in the following description, configuration and processing particular to the second embodiment will be mainly described, and description regarding configuration and processing common to the first embodiment will be omitted.

### Configuration of System

Fig. 11 shows the physical configuration and the program configuration of a data distribution information server 10 of the second embodiment. Differences from the first embodiment (Fig. 2) are that the data distribution information server 10 has a data format specification information registration program 16, and that a data format specification information table is registered in the metadata DB 153.

The data format specification information registration program 16 provides a function (data format specification information registration means) of acquiring data format specification information from a provider of data, and registering the acquired information in the data format specification information table within the metadata DB 153. Data format specification information is information relating to the specification of a data format, and can be uniquely created (defined) by a data provider. The data format specification information registration program 16 provides a user interface (Web page) for registering data format specification information and an API for use in data format specification information registration, and the data provider is able to register data format specification information with one of methods involving manually inputting data format specification information using the user interface or transmitting data format specification information to the API.

Data format specification information is constituted by information such as "format ID", "format name", "format specification remarks", "format specification description" and "compatible format ID", for example. The format ID is an ID that is automatically issued by the data distribution management system in order to uniquely identify the data format specification. The format name is the name of the format and is described with text. The version name may be included in the format name. The format specification remarks are text in a natural language describing a summary of the data format. The format specification description is the specification and definition of the data format. In the present embodiment, three methods are provided as method of setting the format specification description, namely, (1) direct description of the contents of the specification of the data format, (2) attaching a file (data of a specification document) describing the specification of the data format, and (3) designating a URI (Uniform Resource Locator) of a resource (data, program, web page, etc.) describing an indicator of the data format. The compatible format ID is the format ID of another data format that is compatible with the data format that is specified by the format ID. Compatibility is being able to replace the data of a certain data format with the data of another data format (the application on the user side being operable even after replacement). The data format specification information will be discussed in detail later.

### Operation of System

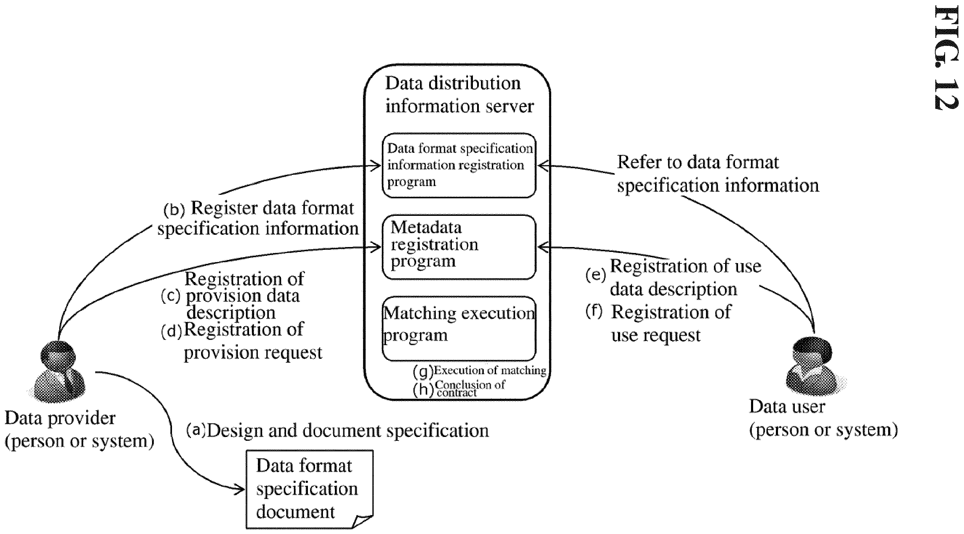

Fig. 12 shows the flow of a series of processing that is performed in the data distribution management system of the present embodiment. (a) to (j) below are descriptions of the processing of corresponding signs within Fig. 12.

(a) Data providers design and document the data format specifications of sensing data.
(b) The data providers register data format specification information in the data distribution information server 10. At this time, the data providers may manually input the data format specification on a registration screen, or upload a document of the data format specification to the data distribution information server 10, or place a document of the data format specification on a public server, and notify the URI of the server to the data distribution information server 10.
(c) The data providers register provision data descriptions in the data distribution information server 10. At this time, the format IDs of data to be provided can be described in the provision data descriptions.
(d) The data providers register provision requests in the data distribution information server 10. At this time, the IDs of the registered provision data description are described in the provision requests.
(e) Data users register use data descriptions in the data distribution information server 10. At this time, the format IDs of data that are desirably used can be described in the use data descriptions.
(f) The data users register use requests in the data distribution information server 10.
(g) The data distribution information server 10 compares the registered provider-side metadata and user-side metadata, and searches combinations of providers and users whose conditions are compatible.
(h) When a combination whose conditions are compatible is found, the data distribution information server 10 generates contract information relating to data provision. Subsequently, the data delivery information server 20 transmits data provided by the provider to a terminal of the user, based on the contract information.

### Working Example

Next, a specific example of processing for registering data format specification information will be described.

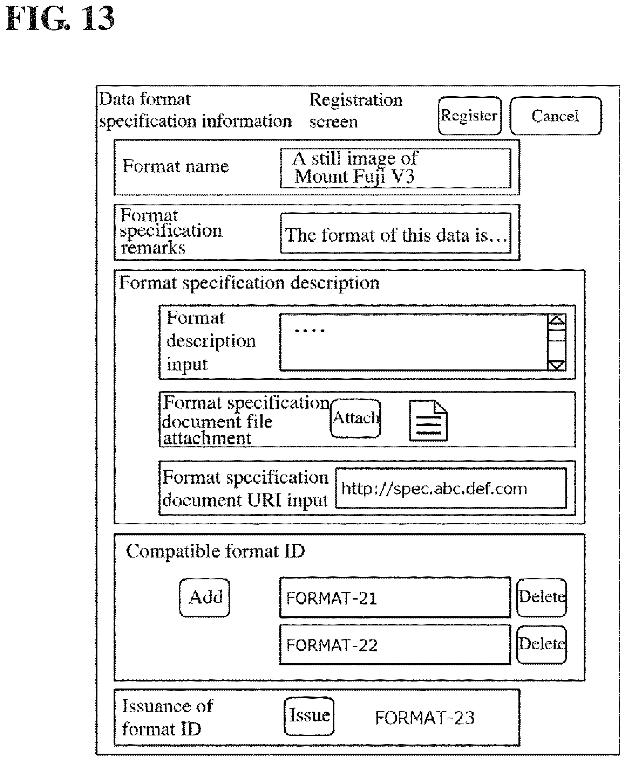

Fig. 13 is an example of a registration screen that is output by the data format specification information registration program 16, when there is a request for registration of data format specification information from a data provider. On this registration screen, the format name and the format specification remarks can be input with text. The format specification description is set with any of methods involving describing the contents of specification directly in a format specification description input box, or attaching the file of a data format specification document converted to document form in advance, or inputting the URI of a data format specification document that is placed on another public server to a format specification document URL link input box. In the case where there is another compatible data format, the compatible format ID can be input to an input box. When an "issue" button is pushed after inputting all of the above information, the data format specification information registration program 16 checks for errors (e.g., input omission, duplication of the name with another data format) in the input information, and issues the format ID if there are no errors.

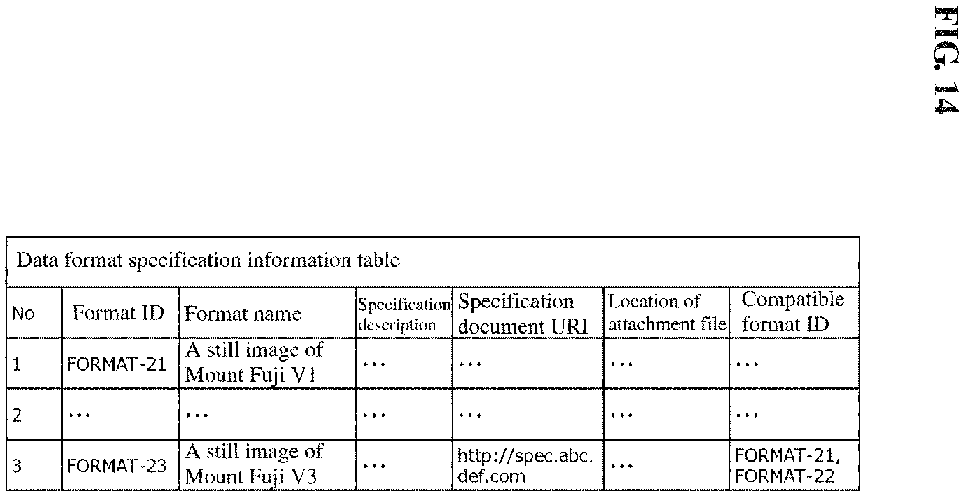

Fig. 13 shows an example in which the URL "http://spec.abc.def.com" of a data format specification document is set as a format description specification, both "FORMAT-21" and "FORMAT-22" are set as compatible format IDs, and "FORMAT-23" is issued as a format ID of the corresponding data format. When a "register" button is pressed after the format ID is issued, this data format specification information is registered in the data format specification information table. Fig. 14 shows an example of the data format specification information table that is registered in the metadata DB.

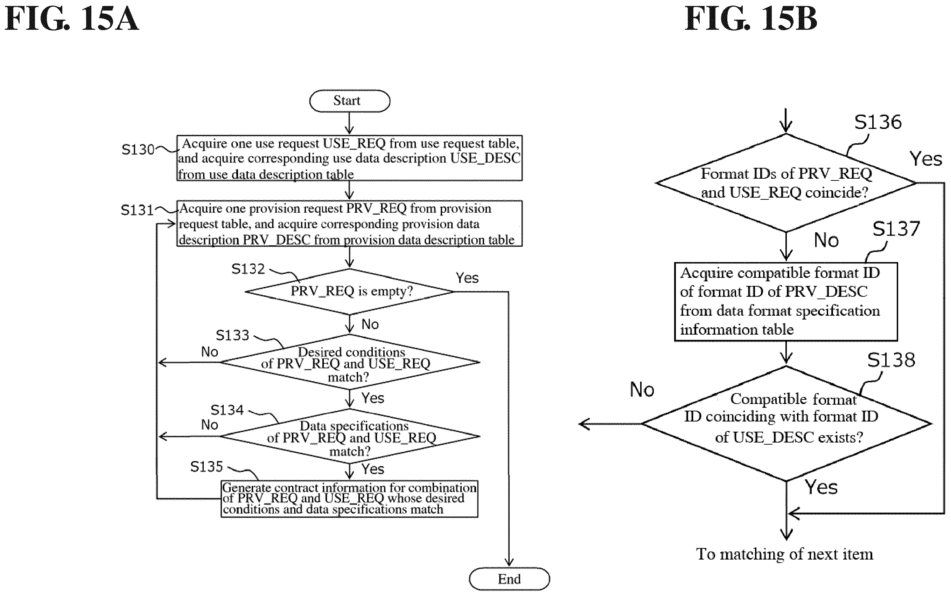

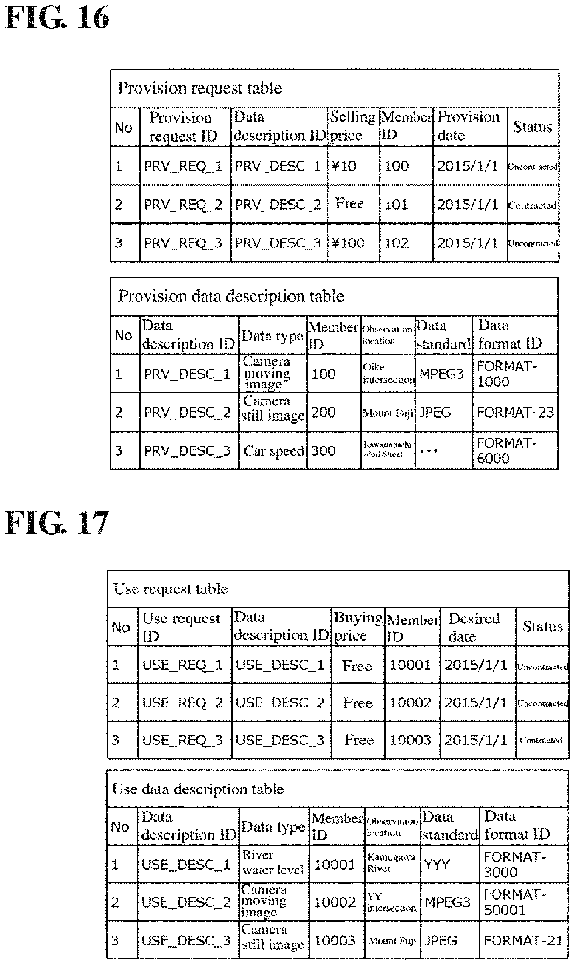

Next, a specific example of matching processing of the matching execution program 152 will be described, with reference to Figs. 15A to 17. Fig. 15A is a flowchart of matching processing, Fig. 16 is an example of a provision request table and a provision data description table, and Fig. 17 is an example of a use request table and a use data description table.

In step S130, the matching execution program 152 extracts one use request from the use request table and sets the use request to a variable USE_REQ, and extracts the use data description linked to the use request USE_REQ from the use data description table and sets the use data description to a variable USE_DESC. In step S131, the matching execution program 152 extracts one provision request from the provision request table and sets the provision request to a variable PRV_REQ, and extracts a provision data description linked to the provision request PRV_REQ from the provision data description table and sets the provision data description to a variable PRV_DESC. If PRV_REQ is empty (Yes in step S132), the processing is ended.

If PRV_REQ is not empty (No in step S132), the matching execution program 152 checks whether the desired conditions on the user side described in the use request USE_REQ match the desired conditions on the provider side described in the provision request PRV_REQ (step S133). If both desired conditions match (Yes in step S133), the matching execution program 152 checks whether the data specification described in the use data description USE_DESC matches the data specification described in the provision data description PRV_DESC (step S134). If both data specifications also match (Yes in step S134), the matching execution program 152 generates contract information relating to data provision between this provider and this user (step S135).

Here, in the case where, in the processing of step S134, the use data description USE_DESC and the provision data description PRV_DESC both include a format ID, matching of the format IDs using the procedure shown in Fig. 15B can be performed.

The matching execution program 152 first compares the format ID described in the use data description USE_DESC with the format ID described in the provision data description PRV_DESC (step S136). When the format IDs coincide (Yes in step S136), it is judged that the data format specification of the use data description USE_DESC matches the data format specification of the provision data description PRV_DESC, and the processing shifts to matching of the next data specification item.

On the other hand, if the format IDs do not coincide (No in step S136), the matching execution program 152 refers to the data format specification information table (Fig. 14), and acquires a compatible format ID that is compatible with the format ID of the provision data description PRV_DESC (step S137). The matching execution program 152 then checks whether any of the compatible format IDs coincide with the format ID of the use data description USE_DESC (step S138). If the format ID coincides with a compatible format ID (Yes in step S138), it is judged that the data format specification of the use data description USE_DESC matches the data format specification of the provision data description PRV_DESC, and the processing shifts to matching of the next data specification item. If the format ID does not coincide with a compatible format ID (No in step S138), it is judged that the use data description USE_DESC does not match the provision data description PRV_DESC, and the processing proceeds to No in step S134 of Fig. 15A.

When the matching processing is performed, given the tables of Figs. 16 and 17, all of the items match in the comparison of the provision request PRV_REQ_2 and the use request USE_REQ_3. Also, in the comparison of a provision data description PRV_DESC_2 and a use data description USE_DESC_3, items other than format ID match. However, since it is evident, on referring to the data format specification information table, that there is compatibility between a format ID FORMAT-21 of the use data description USE_DESC_3 and a format ID FORMAT-23 of the provision data description PRV_DESC_2, matching will be successful (conclusion of contract) as a result.

According to the present embodiment described above, providers of data are able to uniquely design and register data formats, thus enabling the degree of freedom of data formats that can be handled by the system to be enhanced, and the diversity of data formats to be flexibly supported. Also, since the method of setting the specification of a data format can be selected from three methods, convenience for the data provider can be improved. Also, since compatible data formats can be comprehended by referring to the data format specification information, convenience for the data user can also be improved. Furthermore, because matching is also successful in the case where the data format has compatibility, the success rate (conclusion rate) of matching of user-side metadata and provider-side metadata can be enhanced.

### Third Embodiment

In the second embodiment, a mechanism was provided in which, when a provider of data provides data in a unique format, the data format specification of that format can be released to or shared with a data user. In contrast, in the third embodiment of the present invention that will be described below, a mechanism is provided in which, when a provider of data provides data in a unique format, a program (called a data reader) that serves as an input IF for using the data can be released to or shared with a data user. Also as a result of such a mechanism, the degree of freedom of data formats that can be handled by the system can be enhanced, and the diversity of data formats can be flexibly supported, similarly to the second embodiment, enabling convenience for both data providers and users to be improved. In addition, according to this method, since the data provider is able to not release (hide) the specific specification of the data format, the uniqueness of the data to be provided is enhanced, and there is also the advantage of being able to achieve differentiation from other providers.

Note that, in the following description, configuration and processing particular to the third embodiment will be mainly described, and description regarding configuration and processing common to the first embodiment and the second embodiment will be omitted.

### Data Reader Class and Data Reader

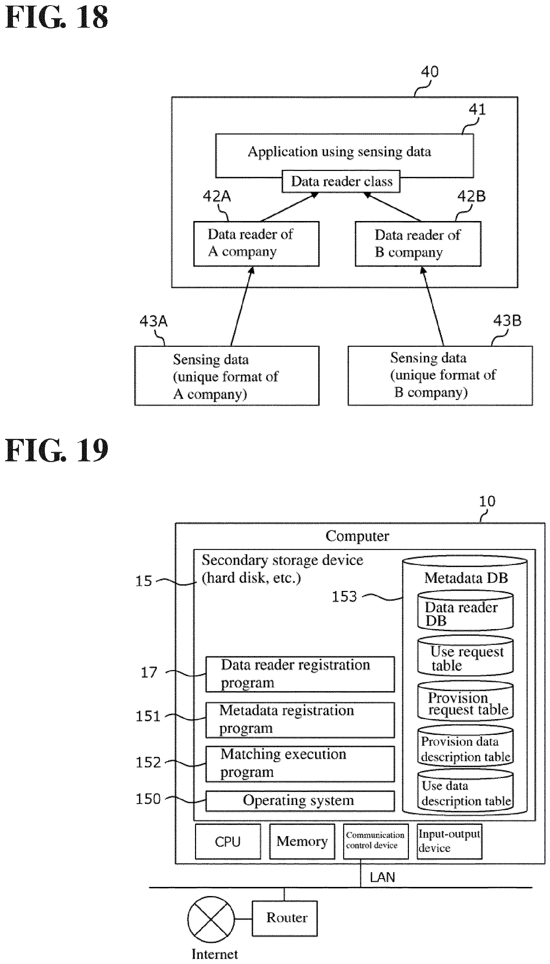

Fig. 18 is a diagram conceptually showing a data reader class and data readers that are used in the system of the present embodiment.

A data reader class is an abstract class specifying procedures (data IF) for when accessing data, and is a collection of API (Application Programming Interface) definitions for acquiring data. An API definition is constituted by, for example, the name of each API, a definition of the format of the data of an argument to be passed to each API, and a definition of the format of data to be returned from each API. Assume that the definition of the data reader class has been released, and the data reader class can be uniquely specified by the name and the version number of the data reader class. Note that it is envisaged that the data reader class will be formulated by data users, data providers, an administrator of a data distribution management system, a business group, a standardization body, and the like, for example. The data format in which the data reader class is released is a generic data format available to anyone. Accordingly, it becomes possible for a data user, by incorporating a data IF corresponding to the data reader class in an application 41, to use the sensing data of a format conforming to the data reader class with the application 41.

A data reader is a program that loads sensing data in a unique format that is provided from a data provider, and converts the sensing data into data conforming to the data reader class. For example, in the example of Fig. 18, A company provides sensing data 43A and B company provides sensing data 43B. Since the sensing data 43A and 43B are both unique formats (unknown formats), the application 41 on the data user side is unable to directly load the data 43A and 43B. In such a case, if a data reader 42A that converts the sensing data 43A in A company format into a known data reader class is used, the application 41is able to handle the sensing data 43A in the A company format to be handled just like data conforming to the data reader class. Similarly, by using the data reader 42B, the application 41 is able to handle the sensing data 43B in B company format just like data conforming to the data reader class. Note that the data reader may be a program that operates as a stand alone program, or may be an add-in module that is added to the application 41, or may be a program such as a device driver.

With such a mechanism, there is the advantage of the data user being able use the data of various unique formats (without altering the application 41), by appropriately changing the data reader that is used. On the other hand, for the data provider, there is the advantage of being able to provide data in unique formats as if it were data in a generic format, and being able to increase the use opportunities of data.

### System Configuration

Fig. 19 shows the physical configuration and the program configuration of a data distribution information server 10 of the third embodiment. Differences from the second embodiment (Fig. 11) are that the data distribution information server 10 has a data reader registration program 17, and that a data reader DB is provided within the metadata DB 153.

The data reader registration program 17 provides a function (data reader registration means) of acquiring data readers from data providers, and registering the data readers in the data reader DB within the metadata DB 153. The data reader registration program 17 provides a user interface (Web page) for registering data readers, and an API for use in data reader registration, and providers of data are able to register data reader with any of methods involving uploading a data reader using the user interface or transmitting a data reader to the API.

### Operation of System

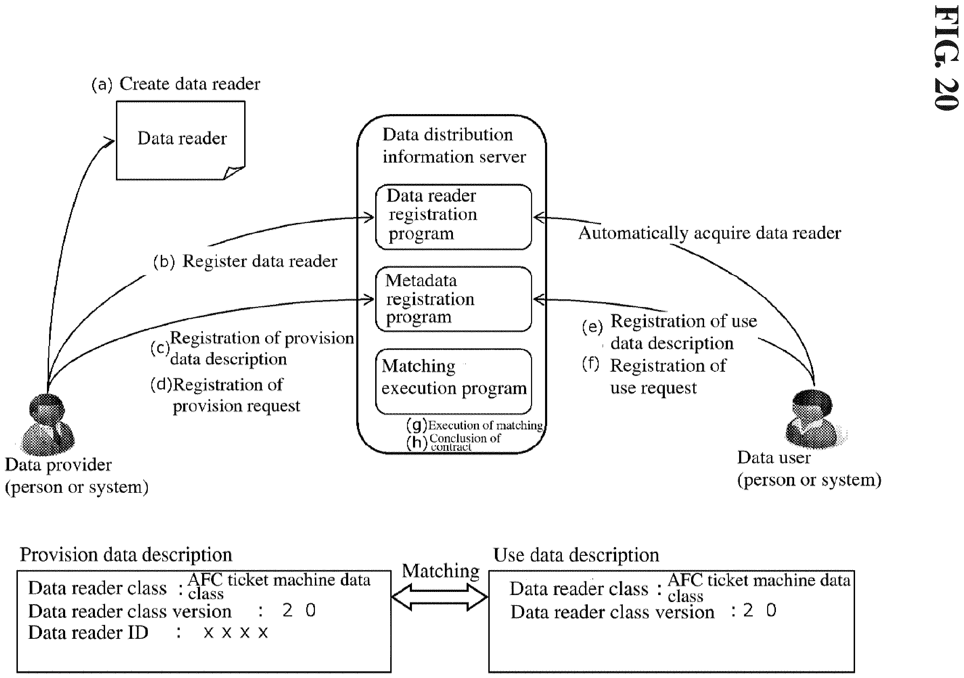

Fig. 20 shows the flow of a series of processing that is performed in the data distribution management system of the present embodiment. (a) to (h) below are descriptions of the processing of corresponding signs in Fig. 20. Here, an example is shown in which ticket machine data in a format uniquely created by a data provider can be used by an application conforming to "AFC ticket machine data class version: 2 0".

(a) Data providers create data readers for converting data in a unique format that they provide into data conforming to "AFC ticket machine data class version: 2 0".
(b) The data providers register the data readers in the data distribution information server 10. Data reader IDs are allocated to the registered data readers, and the data reader IDs and the data readers (programs) are stored in the data reader DB. At this time, the data providers are also able to register the specification of the unique formats. In the case where, however, the format has not been to released, the format specification does not need to be registered.
(c) The data providers register provision data descriptions in the data distribution information server 10. At this time, the data reader ID of the data reader to be used in loading data that is to be provided and information specifying the data reader class (class name, version number, etc.) that the data reader corresponds to (outputs) can be described in the provision data description.
(d) The data providers register provision requests in the data distribution information server 10. At this time, the IDs of the registered provision data descriptions are described in the provision requests.
(e) Data users register use data descriptions in the data distribution information server 10. At this time, information (class name, version number, etc.) specifying the data reader class that is desirably used by the application can be described in the use data descriptions.
(f) The data users register use requests in the data distribution information server 10.
(g) The data distribution information server 10 compares the registered provider-side metadata and user-side metadata, and searches for combinations of providers and users whose conditions are compatible. At this time, matching of the name and the version number of the data reader class is performed between the provision data description and the use data description.
(h) When a combination whose conditions are compatible is found, the data distribution information server 10 generates contract information relating to data provision. Information (data reader ID, etc.) specifying a data reader for using the data is described in the contract information.

Subsequently, the data delivery information server 20 transmits data provided from the provider to the terminal of the user, based on the contract information. The terminal of the data user, at the time of contract conclusion, data reception, or the like, downloads the required data reader from the data distribution information server 10, and uses the data reader in loading data. An application by the user side is thereby able to handle data in formats uniquely created by providers as data conforming to "AFC ticket machine data class version 2 0".

### Other Embodiments

The configuration of the embodiments described above are merely specific examples of the present invention, and are not intended to limit the scope of the invention. The present invention can take various specific configurations that do not depart from the technical concept of the invention.

For example, although, in the above embodiments, an example in which the present invention is applied to infrastructure forming a distribution market for sensing data is described, the applicable scope of the present invention is not restricted to distribution of sensing data, and the invention can also be applied to the distribution of any type of digital data as long as there exist a prospective provider and a prospective user. Also, although, in the above embodiments, the provider-side metadata is constituted by two pieces of data consisting of a provision data description and a provision request, and the user-side metadata is constituted by two pieces of data consisting of a use data description and a use request, the data structure of the metadata is not limited thereto. For example, the information that is included in the data description and the information that is included in the request may be included in one piece of metadata, and information other than this information may be included in metadata.

The technical concept disclosed in this specification can also be specified as inventions such as the following.

### Supplementary Remark 1

A data distribution management system for mediating between a provider of data and a user of data, comprising:
a hardware processor and a memory configured to store a program,
wherein the hardware processor, using the program:
   acquires, from a provider of data, provider-side metadata including data description information describing a specification of data to be provided and provision request information describing a desired condition on a provider side which is a condition to be satisfied in order for the provider of data to agree to provision,
   acquires, from a user of data, user-side metadata including data description information describing a specification of data that is desired to be used and use request information describing a desired condition on a user side which is a condition to be satisfied in order for the user of data to agree to use,
   compares the provider-side metadata with the user-side metadata and generates, in a case where the specifications of data and the desired conditions match, contract information pertaining to data provision from the provider to the user, and
   transmits data that is provided from the provider to a terminal of the user, in accordance with the contract information.

### Supplementary Remark 2

A data distribution management method for mediating between a provider of data and a user of data, comprising the steps of:
acquiring, from a provider of data, provider-side metadata including data description information describing a specification of data to be provided and provision request information describing a desired condition on a provider side which is a condition to be satisfied in order for the provider of data to agree to provision, using at least one hardware processor,
acquiring, from a user of data, user-side metadata including data description information describing a specification of data that is desired to be used and use request information describing a desired condition on a user side which is a condition to be satisfied in order for the user of data to agree to use, using at least one hardware processor,
comparing the provider-side metadata with the user-side metadata and generating, in a case where the specifications of data and the desired conditions match, contract information pertaining to data provision from the provider to the user, using at least one hardware processor, and
transmitting data that is provided from the provider to a terminal of the user, in accordance with the contract information, using at least one hardware processor.

### INDEX TO THE REFERENCE NUMERALS

10: Data Distribution Information Server
20: Data Deliver Information Server
30: Provider-Side Device
40: User-Side Terminal

## Claims

1. A data distribution management system for mediating between a provider of data and a user of data,
a provider-side metadata acquisition means for acquiring, from a provider of data, provider-side metadata including data description information describing a specification of data to be provided and provision request information describing a desired condition on a provider side which is a condition to be satisfied in order for the provider of data to agree to provision;
a user-side metadata acquisition means for acquiring, from a user of data, user-side metadata including data description information describing a specification of data that is desired to be used and use request information describing a desired condition on a user side which is a condition to be satisfied in order for the user of data to agree to use;
a matching means for comparing the provider-side metadata with the user-side metadata and generating, in a case where the specifications of data and the desired conditions match, contract information pertaining to data provision from the provider to the user; and
a data delivery means for transmitting data that is provided from the provider to a terminal of the user, in accordance with the contract information.

2. The data distribution management system recited in claim 1, further comprising a data collection means for collecting data automatically from the provider-side device in accordance with a data collection setting condition which is information defining a procedure for collecting data from a provider-side device of the provider via a network.

3. The data distribution management system recited in claim 2,
wherein the provider-side metadata acquisition means acquires the data acquisition setting condition from the provider as the provider-side metadata.

4. The data distribution management system recited in claim 2 or 3,
wherein the data collection setting condition includes information on an API for use in data acquisition that is usable by the provider-side device with respect to another device.

5. The data distribution management system recited in any one of claims 2 to 4, wherein the data collection setting condition includes information relating to a period and/or a time for acquiring data.

6. The data distribution management system recited in claim 5, further comprising a task generation means for generating a collection task prescribing a date-time for executing data collection from the provider-side device, based on the data collection setting condition,
wherein the data collection means executes the collection task when the execution date-time arrives.

7. The data distribution management system recited in any one of claims 1 to 6, further comprising a data format specification information registration means for acquiring, from a provider of data, data format specification information which is information relating to a specification of a data format uniquely created by the provider, and registering the data format specification information in a data format specification information database,
wherein the data description information is configured to describe a format ID specifying the data format specification information registered in the data format specification information database.

8. The data distribution management system recited in claim 7,
wherein the data format specification information includes at least one of description of the specification of the data format, information on a file describing the specification of the data format, and a URI of a resource describing the specification of the data format.

9. The data distribution management system recited in claim 7 or 8,
wherein the data format specification information is configured to describe a compatible format ID which is the format ID of a data format that is compatible with the uniquely created data format.

10. The data distribution management system recited in any one of claims 7 to 9, wherein the matching means:
acquires, from the data format specification information database, a compatible format ID relating to the format ID on the provider side described in the data description information included in the provider-side metadata, and
judges that the data formats match, in a case where the format ID on the user side described in the data description information included in the user-side metadata coincides with one of the format ID on the provider side and the compatible format ID relating thereto.

11. The data distribution management system recited in any one of claims 1 to 10, further comprising:
a data reader database for storing a data reader which is a program for using data in a data format uniquely created by the provider,
wherein the data reader database is configured to provide a data reader for using the data in the data format uniquely created by the provider to the terminal of a user that uses the data.

12. The data distribution management system recited in claim 11,
wherein the data reader is a program having a function of converting the data in the data format uniquely created by the provider into data conforming to a generic data format, and
the data description information is configured to describe information for specifying the generic data format.

13. A data distribution management method for mediating between a provider of data and a user of data, comprising the steps of:
acquiring, from a provider of data, provider-side metadata including data description information describing a specification of data to be provided and provision request information describing a desired condition on a provider side which is a condition to be satisfied in order for the provider of data to agree to provision, using at least one hardware processor,
acquiring, from a user of data, user-side metadata including data description information describing a specification of data that is desired to be used and use request information describing a desired condition on a user side which is a condition to be satisfied in order for the user of data to agree to use, using at least one hardware processor,
comparing the provider-side metadata with the user-side metadata and generating, in a case where the specifications of data and the desired conditions match, contract information pertaining to data provision from the provider to the user, using at least one hardware processor, and
transmitting data that is provided from the provider to a terminal of the user, in accordance with the contract information, using at least one hardware processor.
